# FASCICULE DE BREVET EUROPEEN

(11) **EP 2 298 424 B1**
(45) Date de publication et mention de la délivrance du brevet: **04.11.2015**
(21) Numéro de dépôt: 10176713.5
(22) Date de dépôt: 14.09.2010
(51) Int. Cl.: A63F 13/98, A63F 13/92

(54) **Etui de protection pour console de jeux vidéo**
Schutzhülle für eine Videospielkonsole
Protective case for a video game console

(30) Priorité: 14.09.2009 FR 0904361
(43) Date de publication de la demande: 23.03.2011
(73) Titulaire: Bigben Interactive SA, 59818 Lesquin (FR)
(72) Inventeur: Allaert, Yannick, 59221, Bauvin (FR); Falc, Alain, 8500, Kortrijk (BE); Liddle, Mark, Bracknell, Berkshire RG42 6HR (GB)
(74) Mandataire: Vigand, Philippe

(56) Documents cités:
- DE-A1- 10 034 146
- FR-A1- 2 904 198
- US-A1- 2007 001 079
- US-A1- 2007 225 031
- US-A1- 2008 164 790

## Description

### DOMAINE TECHNIQUE

La présente invention concerne de manière générale une pochette de protection pour console de jeu vidéo portable permettant d'utiliser la console de jeu dans sa pochette.

### ARRIERE-PLAN TECHNOLOGIQUE

Il est connu dans l'art antérieur, toutes sortes de pochette ou coque de protection pour console de jeu vidéo permettant de transporter de manière aisée et sécurisée les consoles portables. En particulier, il est connu de la demande FR 2 923 647 déposée au nom de la présente Demanderesse, telle que représentée à la figure 1, une pochette de protection 1 pour console de jeu vidéo portable formée d'une face supérieure 2 et d'une face inférieure 3 articulées l'une par rapport à l'autre au niveau d'une zone arrière 4 et définissant une première position dite fermée lorsque la face supérieure est superposée à la face inférieure et une deuxième position dite ouverte lorsque les faces supérieure et inférieure sont juxtaposées.

Un élément de maintien 5 de la console est fixé sur la face inférieure 3 à l'intérieur de la pochette. Cet élément de maintien 5 est réalisé sous forme d'un système d'attache comprenant sur l'arrière de la console deux languettes de fixation 14 agencées pour s'encliqueter sur le rebord arrière de la console et sur le devant de la console, deux éléments de butée 15 agencés de manière opposée aux languettes de fixation 14. De cette manière, ce système d'attache par encliquetage permet de retenir la console sans la recouvrir et rend donc aisée la mise en place de la console dans l'élément de maintien ainsi que son extraction hors de l'élément de maintien. La console peut donc être soit utilisée depuis sa position dans la pochette 1 sans avoir à l'en retirer soit repliée totalement.

Une telle pochette de protection bien que commode et utile ne permet pas de s'adapter à différentes types de console, par exemple en raison d'une évolution de la gamme de consoles engendrant une modification de la taille de la nouvelle console par rapport à l'ancienne, et nécessite donc l'achat d'une nouvelle pochette munie de moyens d'attache adaptés pour chaque format de console portable. Ceci s'avère, d'une part, peu économique pour le consommateur, et peut d'autre part engendrer un risque de confusion entre deux pochettes, de sorte que l'utilisateur choisissant une console lors d'un départ en voyage pourrait par mégarde prendre la pochette destinée à une autre console.

Il est connu par ailleurs, notamment du document US 2007/001079, un étui de protection pour un dispositif électronique, comme par exemple une tablette, permettant à l'utilisateur de positionner l'écran de la tablette dans différentes positions par l'intermédiaire d'un mécanisme de rotation.

### RESUME DE L'INVENTION

Le but de la présente invention est de répondre aux différents inconvénients mentionnés ci-dessus et en particulier de fournir un étui de protection pour console de jeu vidéo portable capable de s'adapter au format de plusieurs consoles, tout en assurant, d'une part, un maintien robuste, simple et rapide et en veillant, d'autre part à garder une épaisseur d'étui la plus fine possible.

Pour cela, un premier aspect de l'invention concerne un étui de protection pour console de jeu vidéo portable, comprenant un dispositif de maintien de la console à l'intérieur de l'étui, formé par un socle fixé à l'intérieur de l'étui coopérant avec un élément de retenue interchangeable adapté au format de la console à maintenir, ledit élément de retenue étant choisi parmi un assortiment comprenant plusieurs éléments de retenue adaptés à différents formats de console, **caractérisé en ce que** le socle et l'élément de retenue coopèrent au moyen d'un mécanisme à baïonnette, dont la rotation s'effectue dans le plan du socle. L'utilisation d'un mécanisme à baïonnette pour fixer l'élément de retenue sur le socle présente l'avantage d'être simple et rapide grâce au mouvement naturel nécessaire du poignet de poussé-tourné, tout en assurant une liaison solide entre les deux éléments du dispositif de maintien évitant que le poids de la console ne désolidarise l'élément de retenue de son socle et provoque ainsi la chute de la console. D'autre part, la rotation du mouvement de baïonnette est avantageusement réalisée dans le plan du socle, ce qui permet de réduire l'épaisseur totale du dispositif de maintien permettant donc de garder un design compact et esthétique pour l'étui.

Selon un mode de réalisation avantageux de l'invention, le socle est formé par un élément plan dans lequel a été pratiqué un évidement pourvu de deux encoches, à partir desquelles deux rainures sont agencées, suivant un même sens de rotation, le long d'une partie au moins de l'évidement sur la surface inférieure du socle. Chaque élément de retenue interchangeable est formé par un berceau comprenant un fond plat muni en dessous d'une partie faisant saillie pour coopérer avec l'évidement du socle et pourvue de deux languettes s'étendant latéralement dans un plan parallèle au fond et disposées en regard des encoches du socle. Un tel dispositif de maintien présente une épaisseur encore plus réduite grâce à la découpe des rainures de la baïonnette dans l'épaisseur du socle ainsi qu'un fonctionnement aisé par l'intermédiaire de la coopération entre l'évidement du socle et la partie faisant saillie de l'élément de retenue.

Selon une variante de réalisation, les deux languettes sont de taille différente, chacune languette étant appariée à une encoche de taille correspondante. De telles languettes de taille différente sont utilisées comme détrompeur lors de leur insertion dans les encoches de taille correspondante. De cette manière, l'utilisateur cherchant à fixer un élément de retenue sur le socle ne pourra y parvenir qu'en positionnant correctement l'élément de retenue par rapport au socle. Avantageusement, des moyens indicateurs sont prévus pour indiquer l'appariement des languettes avec les encoches.

Selon une autre variante de réalisation, un logement pour languette est réalisé à l'extrémité de chacune des rainures. Ces logements permettent de verrouiller l'élément de retenue lorsque les languettes sont en fin de course dans les rainures. De préférence, ces logements sont matérialisés par un ergot pratiqué en travers de la rainure correspondante.

Selon une autre variante de réalisation, la course des rainures est de 90°. Une telle course assure d'une part un mouvement de rotation aisé pour le poignet de l'utilisateur tout en garantissant une liaison robuste entre le socle et l'élément de retenue.

Selon une autre variante de réalisation, le fond plat du socle comprend des ouvertures en regard des languettes permettant un positionnement aisé de l'élément de retenue par rapport au socle avant sa fixation.

Selon un autre mode de réalisation de l'invention, le socle est intégré dans l'épaisseur de l'étui. De cette manière, l'épaisseur totale de l'étui est encore plus réduite grâce à l'immersion de la partie socle du dispositif de maintien.

Selon un autre mode de réalisation de l'invention, l'élément de retenue est pourvu de moyens indicateurs du sens de rotation.

### BREVE DESCRIPTION DES FIGURES

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1, déjà décrite, représente une pochette de protection pour console de jeu vidéo selon l'art antérieur;
- la figure 2 représente un étui de protection pour console de jeu vidéo contenant une console en position repliée;
- la figure 3 représente un étui de protection déplié muni uniquement d'un socle selon un mode de réalisation préféré de l'invention ;
- la figure 4 représente une vue de dessous du socle selon le mode de réalisation de la figure 3 ;
- les figures 5a et 5b représentent des vues de dessous et dessus d'un élément de retenue interchangeable pour un format donné de console ;
- les figures 5c et 5d représentent des vues de côté de l'élément de retenue selon les figures 5a et 5b ;
- les figures 6a et 6b représentent en deux étapes la coopération entre l'élément de retenue et le socle.

### DESCRIPTION DETAILLEE DE L'INVENTION

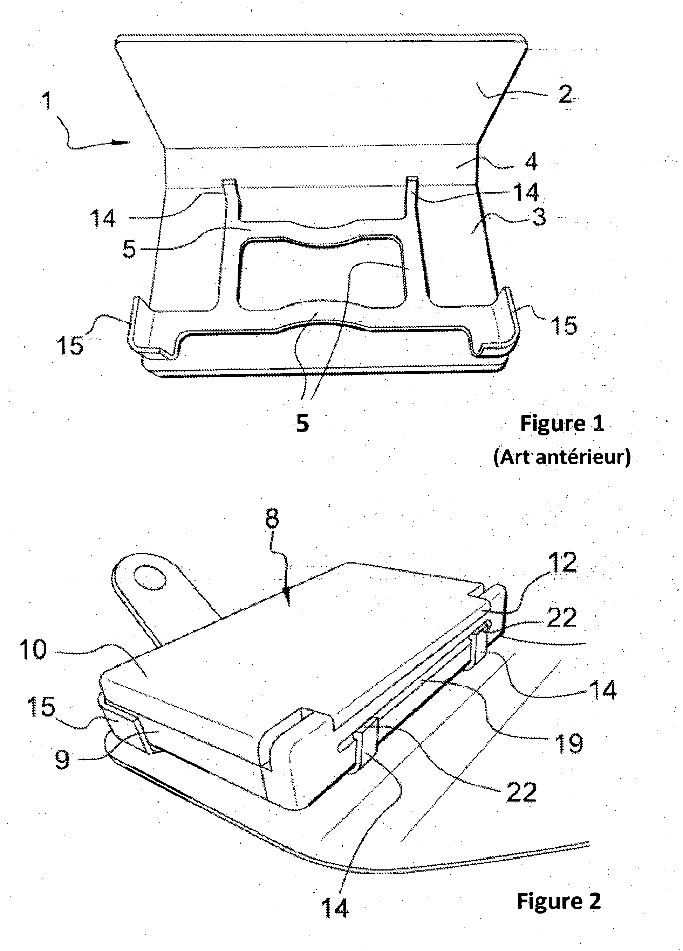

Dans la suite de la présente description, comme représenté à la figure 2, il sera fait référence à une console de jeu 8 comprenant une partie inférieure 9 et une partie supérieure 10 rabattable reliée à la partie inférieure par une charnière 12. Une telle console présente une première position dite dépliée, dans laquelle se trouve la console lorsqu'un utilisateur joue avec, et une deuxième position dite repliée lorsque la partie supérieure 10 est rabattue sur la partie inférieure 9. Toutefois, il est bien entendu que l'invention pourrait également s'appliquer à une console de jeu vidéo monobloc.

Le système d'attache s'effectue avantageusement par clipsage, dont au moyen d'éléments de butée 15, maintenant la partie inférieure 9 de la console sans en recouvrir les organes de commande ni empêcher de rabattre la partie supérieure 10 de la console. La console peut donc aisément être utilisée depuis sa position dans la pochette 1 sans avoir à l'en retirer ou être repliée totalement. On retrouve ainsi les avantages d'une utilisation facilitée dans les transports en commun, tout en garantissant un certain confort de jeu et de sécurité en cas de chute de la console, cette dernière étant alors protégée par la pochette. Comme cela est visible, les éléments de butée 15 abutent contre le bord de la partie inférieure 9 de la console et les languettes de fixation 14 se clipsent sur le rebord de la partie inférieure de la console. Dans l'exemple d'une console en deux parties reliées par une charnière 12, il est prévu que l'ergot 22 de chaque languette 14 vienne se fixer dans la rainure 19 formée par la charnière avec la partie inférieure. On notera que dans le cas, d'une console monobloc, l'ergot, c'est-à-dire la partie faisant saillie, vient en prise avec l'arête supérieure, i.e. le rebord, de la console.

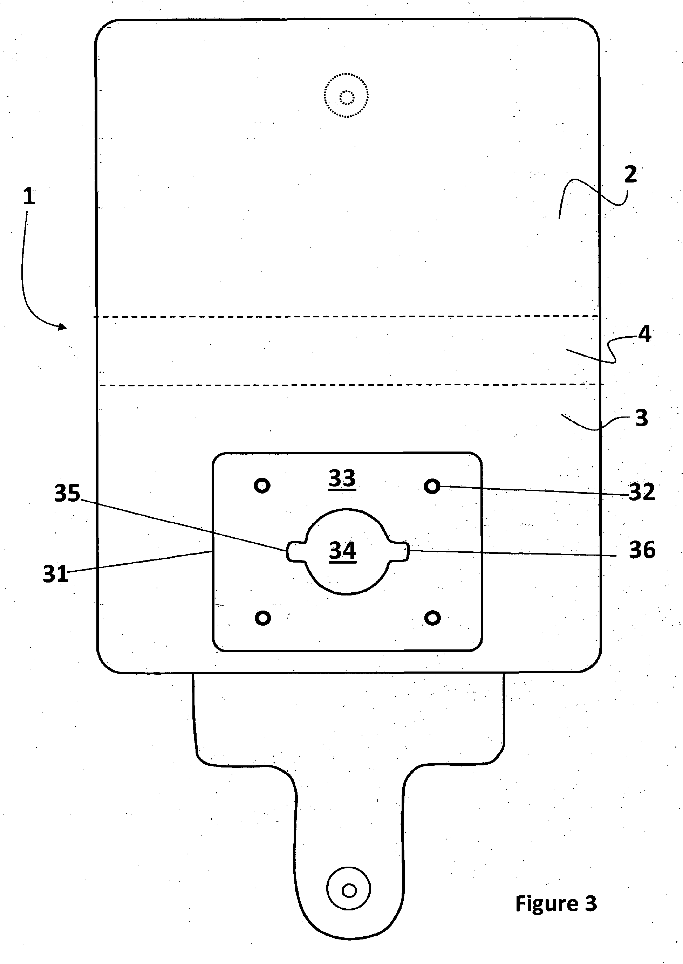

L'invention sera décrite ci-après uniquement à titre d'exemple non limitatif en relation avec les figures 3 à 6b, les figures 1 et 2 ayant été déjà décrites précédemment.

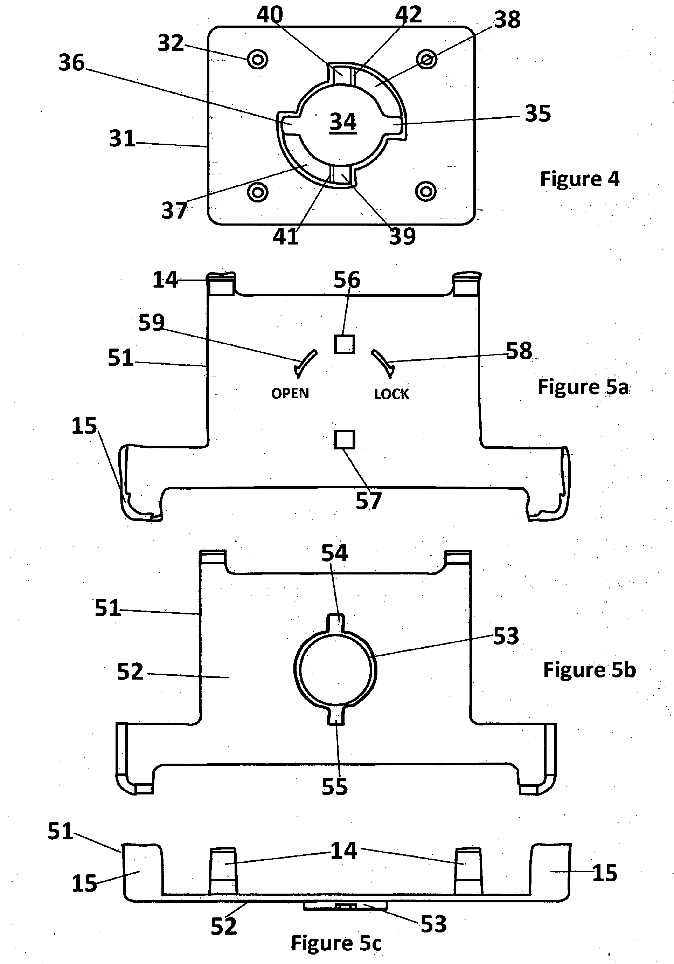

La figure 3 représente un étui de protection déplié muni uniquement d'un socle. L'étui de protection 1 comprend une face supérieure 2 et une face inférieure 3 articulée l'une par rapport à l'autre, de préférence par pivotement, au niveau d'une zone arrière 4 et définissant une première position dite fermée lorsque la face supérieure est superposée à la face inférieure et une deuxième position dite ouverte ou dépliée lorsque les faces supérieure et inférieure sont juxtaposées comme cela est représenté. Un dispositif en de maintien en deux parties est prévu. Ce dispositif de maintien comprend un socle 31 et au moins un élément de retenue interchangeable (voir les figures 5a à 5d).

Le socle 31 est fixé solidement sur la face inférieure 3 à l'intérieur de l'étui, par exemple par l'intermédiaire de quatre vis 32 réparties sur l'ensemble de la surface du socle. Le socle peut être par exemple de forme rectangulaire. Il est pourvu de moyens de coopération avec l'élément de retenue. Ainsi, le socle est avantageusement formé par un élément plan 33 dans lequel a été pratiqué un évidement 34 circulaire, pourvu de deux encoches 35, 36, de préférence diamétralement opposées. Afin de réduire au maximum la hauteur du dispositif de maintien, le socle pourra être intégré dans l'épaisseur de l'étui, c'est-à-dire ici dans l'épaisseur de la face inférieure 3.

La figure 4 représente une vue de dessous du socle de la figure 3. Sur cette vue, on retrouve le socle 31 comprenant un évidement circulaire 34 pourvu d'encoches 35 et 36, à partir desquelles deux rainures 37, 38, de préférence annulaires, sont agencées, suivant un même sens de rotation, le long d'une partie de l'évidement sur la surface inférieure du socle. Avantageusement, il est prévu un logement 39, 40 à l'extrémité de chacune des rainures 37, 38. Ces logements 39, 40 sont matérialisés par un ergot 41, 42 pratiqué en travers de la rainure correspondante. La course des rainures est de préférence de 90° environ.

Les figures 5a et 5b représentent les vues de dessus et de dessous d'un élément de retenue 51 interchangeable pour un format donné de console. On comprendra tout naturellement que le socle est destiné à pouvoir recevoir plusieurs éléments de retenue de tailles différentes (en particulier la largeur et la longueur totales), adaptés à différents formats de console, l'utilisateur fixant l'élément de retenue correspondant à la console qu'il souhaite placer dans l'étui. Dans la suite de la présente description, il sera fait référence à un seul modèle d'élément de retenue adapté à un format donné de console, dans la mesure où les éléments de coopération de chacun des différents éléments de retenue avec le socle de l'étui restent les mêmes.

L'exemple représenté d'élément de retenue 51 comprend un mécanisme de retenue de la console (figure 5a) constitué d'éléments de butée 15 venant de préférence se clipser légèrement sur le rebord de la partie inférieure de la console et des languettes de fixation 14 venant se clipser dans la charnière arrière de la console. En outre, chacun des éléments de retenue 51 interchangeables comprend des moyens de coopération (figure 5b) avec le socle. Ainsi, chaque élément de retenue est formé d'un berceau 52 comprenant un fond plat muni en dessous d'une partie faisant saillie 53 pour coopérer avec l'évidement du socle et pourvue de deux languettes 54 et 55 s'étendant latéralement dans un plan parallèle au fond. On notera qu'un tel étui est prévu pour permettre à l'utilisateur de jouer à la console lorsqu'elle est placée dans l'étui. Pour cela, il est préférable que la charnière de la console soit placée du même côté que la zone arrière de l'étui. A cet effet, on pourra prévoir deux languettes de tailles différentes, appariées chacune à une encoche de taille correspondante pour autoriser le positionnement du berceau uniquement dans le sens souhaité. Le fond plat du berceau 52 (figure 5a) comprend de préférence des ouvertures 56 et 57 au dessus des languettes 54 et 55 pour permettre un positionnement plus aisé de l'élément de retenue sur le socle. En outre, il peut être également prévu des moyens indicateurs 58 et 59 du sens de rotation pour verrouiller et déverrouiller l'élément de retenue sur le socle.

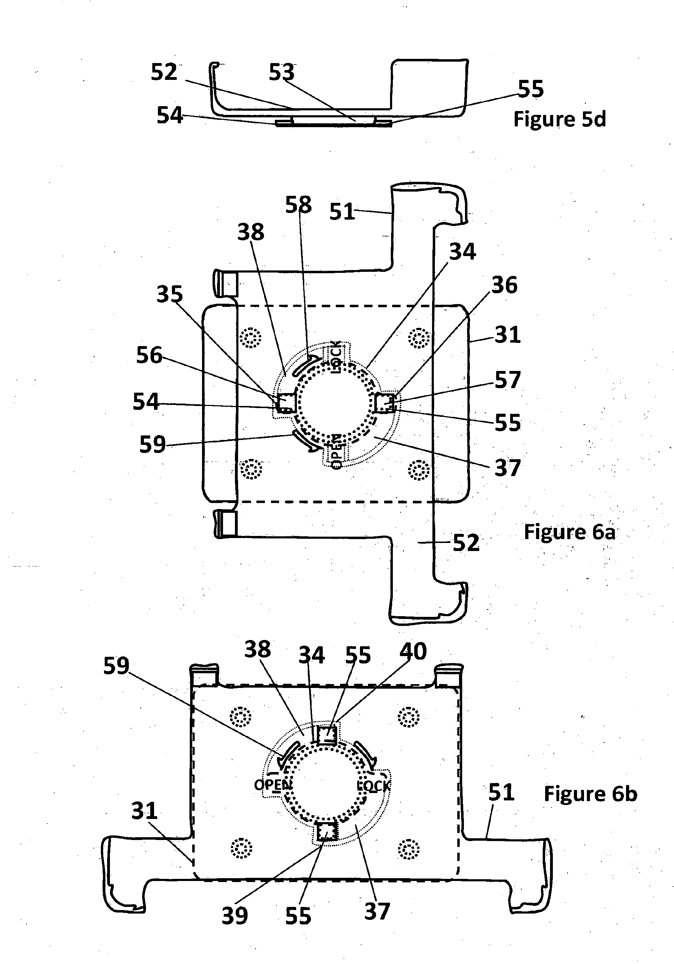

Les figures 5c et 5d représentent des vues de côté de l'élément de retenue selon les figures 5a et 5b. Sur la figure 5c, on voit de manière plus détaillée, les éléments de butée 15 et les languettes 14 de clipsage arrière, ainsi que l'agencement des moyens de coopération 53 sous le berceau 52 de l'élément de retenue 51. Sur la figure 5d, on voit de manière plus détaillée, la partie 53 faisant saillie en dessous du berceau 52, partie depuis laquelle s'étendent deux languettes 54 et 55, préférablement diamétralement opposées.

Les figures 6a et 6b représentent en deux étapes la coopération entre l'élément de retenue 51 et le socle 31. Lors d'une première étape (figure 6a), les ouvertures 56 et 57 du berceau 52 sont positionnées au dessus et en regard des encoches 35 et 36 du socle de sorte que l'élément de retenue est perpendiculaire au socle dans cet exemple où la course de rotation a été fixée à 90°. Dans cette position, les languettes 54 et 55 sont insérées à l'intérieur des encoches. Le sens de verrouillage est indiqué par la flèche 58 et la mention « LOCK ». Lorsque l'utilisateur fait pivoter l'élément de retenue dans le sens de verrouillage, les languettes 54 et 55 se déplacent dans les rainures 38 et 37 pratiquées dans la partie inférieure du socle. On notera que dans la position de la figure 6a, il n'est pas possible de faire tourner l'élément de retenue dans le sens de déverrouillage (flèche 59) dans la mesure où aucune rainure n'est prévue à côté des encoches dans cette direction. Lors de la deuxième étape (figure 6b), l'élément de retenue 51 a pivoté de 90° par rapport au socle 31, par l'intermédiaire des languettes 54 et 55 qui se sont déplacées dans les rainures 38 et 37 le long de l'évidement 34, jusqu'à venir en butée dans les logements 39 et 40. Dans cette position (figure 6b) le dispositif de maintien constitué par l'élément de retenue et le socle est solidement fixé dans l'étui permettant une bonne tenue de la console. Pour déverrouiller, l'élément de retenue, il suffit à l'utilisateur de le tourner dans le sens indiqué par la flèche 59 accompagnée de la mention « OPEN ». Dans ce cas, les languettes 54 et 55 parcourent le chemin inverse à l'intérieur des rainures 37 et 38 pour revenir dans la position de la figure 6a, dans laquelle l'élément de retenue peut être retiré.

On comprendra que diverses modifications et / ou améliorations évidentes pour l'homme du métier peuvent être apportées aux différents modes de réalisation de l'invention décrits dans la présente description sans sortir du cadre de l'invention défini par les revendications annexées.

En particulier, il est bien entendu que le système d'attache de la console pourra être par clipsage mais également par tout autre moyen adéquat permettant de bien maintenir la console.

## Revendications

1. Etui (1) de protection pour console (8) de jeu vidéo portable, comprenant un dispositif de maintien de la console à l'intérieur de l'étui, formé par un socle (31) fixé à l'intérieur de l'étui coopérant avec un élément de retenue (51) adapté au format de la console à maintenir, **caractérisé en ce que** ledit élément de retenue est un élément interchangeable pouvant être choisi parmi un assortiment comprenant plusieurs éléments de retenue adaptés à différents formats de console, et **en ce que** le socle et l'élément de retenue coopèrent au moyen d'un mécanisme à baïonnette, dont la rotation s'effectue dans le plan (33) du socle.

2. Etui (1) de protection selon la revendication 1, **caractérisé en ce que** le socle (31) est formé par un élément plan (33) dans lequel a été pratiqué un évidement (34) pourvu de deux encoches (35, 36), à partir desquelles deux rainures (37, 38) sont agencées, suivant un même sens de rotation, au moins le long d'une partie de l'évidement sur la surface inférieure du socle et **en ce que** chaque élément de retenue (51) interchangeable est formé par un berceau (52) comprenant un fond plat muni en dessous d'une partie (53) faisant saillie pour coopérer avec l'évidement du socle et pourvue de deux languettes (54, 55) s'étendant latéralement dans un plan parallèle au fond et disposées en regard des encoches du socle.

3. Etui (1) de protection selon la revendication 2, **caractérisé en ce que** les deux languettes (54, 55) sont de tailles différentes, chaque languette étant appariée à une encoche (35, 36) de taille correspondante.

4. Etui (1) de protection selon la revendication 2 ou 3, **caractérisé en ce que** le berceau (52) et le socle (31) sont munis de moyens indicateurs pour l'appariement des languettes (54, 55) avec les encoches (35, 36).

5. Etui (1) de protection selon l'une des revendications 2 à 4, **caractérisé en ce qu'**un logement (39, 40) pour languette est réalisé à l'extrémité de chacune des rainures (37, 38).

6. Etui (1) de protection selon la revendication 5, **caractérisé en ce que** les logements (39, 40) sont réalisés au moyen d'un ergot (41, 42) en travers de la rainure (37, 38) correspondante.

7. Etui (1) de protection selon l'une des revendications 2 à 6, **caractérisé en ce que** la course des rainures (37, 38) est de 90°.

8. Etui (1) de protection selon l'une des revendications 2 à 7, **caractérisé en ce que** le berceau (52) comprend des ouvertures (56, 57) au dessus des languettes (54, 55).

9. Etui (1) de protection selon l'une des revendications précédentes, **caractérisé en ce que** le socle (31) est intégré dans l'épaisseur de l'étui.

10. Etui (1) de protection selon l'une des revendications précédentes, **caractérisé en ce que** l'élément de retenue (51) est pourvu de moyens indicateurs (58, 59) du sens de rotation.

## Patentansprüche

1. Schutzhülle (1) für tragbare Videospielkonsole (8), die eine Haltevorrichtung der Konsole in der Hülle umfasst, die von einem in der Hülle befestigten Sockel (31) gebildet ist, der mit einem Haltemittel (51) zusammenarbeitet, das an das Format der zu haltenden Konsole angepasst ist, **dadurch gekennzeichnet, dass** das Halteelement ein Austauschelement ist, das aus einem Sortiment wählbar ist, das mehrere Haltemittel umfasst, die an verschiedene Formate der Konsole angepasst sind, und dass der Sockel und das Haltemittel mittels eines Bajonettmechanismus zusammenarbeiten, dessen Rotation in der Ebene (33) des Sockels erfolgt.

2. Schutzhülle (1) nach Anspruch 1, **dadurch gekennzeichnet, dass** der Sockel (31) von einem ebenen Element (33) gebildet ist, in welches eine Aussparung (34) eingearbeitet ist, die mit zwei Kerben (35, 36) ausgestattet ist, von denen gemäß einer selben Rotationsrichtung zwei Rillen (37, 38) mindestens entlang eines Teils der Aussparung auf der Unterseite des Sockels abgehen und dass jedes austauschbare Haltemittel (51) von einem Korb (52) gebildet ist, der einen flachen Boden umfasst, der unten mit einem Teil (53) ausgestattet ist, das hervorsteht, um mit der Aussparung des Sockels zusammenzuarbeiten, und mit zwei Zungen (54, 55) ausgestattet ist, die sich seitlich in einer Ebene parallel zum Boden erstrecken und gegenüber den Kerben des Sockels angeordnet sind.

3. Schutzhülle (1) nach Anspruch 2, **dadurch gekennzeichnet, dass** die zwei Zungen (54, 55) unterschiedliche Größen haben, wobei jede Zunge einer Kerbe (35, 36) entsprechender Größe zugeordnet ist.

4. Schutzhülle (1) nach Anspruch 2 oder 3, **dadurch gekennzeichnet, dass** der Korb (52) und der Sockel (31) mit Anzeigemitteln für das Pairing der Zungen (54, 55) mit den Kerben (35, 36) ausgestattet sind.

5. Schutzhülle (1) nach einem der Ansprüche 2 bis 4, **dadurch gekennzeichnet, dass** am Ende jeder der Rillen (37, 38) eine Aufnahme (39, 40) für die Zunge ausgebildet ist.

6. Schutzhülle (1) nach Anspruch 5, **dadurch gekennzeichnet, dass** die Aufnahmen (39, 40) mittels eines Sporns (41, 42) durch die entsprechende Rille (37, 38) ausgebildet sind.

7. Schutzhülle (1) nach einem der Ansprüche 2 bis 6, **dadurch gekennzeichnet, dass** der Weg der Rillen (37, 38) 90° beträgt.

8. Schutzhülle (1) nach einem der Ansprüche 2 bis 7, **dadurch gekennzeichnet, dass** der Korb (52) oberhalb der Zungen (54, 55) Öffnungen (56, 57) umfasst.

9. Schutzhülle (1) nach einem der vorangehenden Ansprüche, **dadurch gekennzeichnet, dass** der Sockel (31) in die Dicke der Hülle integriert ist.

10. Schutzhülle (1) nach einem der vorangehenden Ansprüche, **dadurch gekennzeichnet, dass** das Haltemittel (51) mit Anzeigemitteln (58, 59) der Rotationsrichtung ausgestattet ist.

## Claims

1. A protective case (1) for a video game console (8), comprising a device for maintaining the console inside the case, formed by a base (31) attached inside the case cooperating with an adapted retaining element (51) to the format of the console to be maintained, **characterized in that** said retaining element is an interchangeable element which may be selected from a collection comprising several retaining elements adapted to different console formats, and **in that** the base and the retaining element cooperate by means of a bayonet mechanism, the rotation of which is carried out in the plane (33) of the base.

2. The protective case (1) according to claim 1, **characterized in that** the base (31) is formed by a planar element (33) in which a recess (34) has been made, provided with two notches (35, 36) from which two grooves (37, 38) are laid out, following a same direction of rotation, at least along a portion of the recess on the lower surface of the base and **in that** each interchangeable retaining element (51) is formed by a cradle (52) comprising a flat bottom provided on the underside with a protruding portion (53) for cooperating with the recess of the base and provided with two tabs (54, 55) extending laterally in a plane parallel to the bottom and positioned facing the notches of the base.

3. The protective case (1) according to claim 2, **characterized in that** both tabs (54, 55) have different sizes, each tab being paired with a notch (35, 36) of corresponding size.

4. The protective case (1) according to claim 2 or 3, **characterized in that** the cradle (52) and the base (31) are provided with indicator means for the pairing of the tabs (54, 55) with the notches (35, 36).

5. The protective case (1) according to one of claims 2 to 4, **characterized in that** a housing (39, 40) for a tab is made at the end of each of the grooves (37, 38).

6. The protective case (1) according to claim 5, **characterized in that** the housings (39, 40) are made by means of a lug (41, 42) through the corresponding groove (37, 38).

7. The protective case (1) according to one of claims 2 to 6, **characterized in that** the travel of the grooves (37, 38) is 90°.

8. The protective case (1) according to one of claims 2 to 7, **characterized in that** the cradle (2) comprises apertures (56, 57) above the tabs (54, 55).

9. The protective case (1) according to one of the preceding claims, **characterized in that** the base (31) is integrated into the thickness of the case.

10. The protective case (1) according to one of the preceding claims, **characterized in that** the retaining element (51) is provided with means (58, 59) indicating the direction of rotation.
